# EUROPEAN PATENT APPLICATION

(11) **EP 4 836 377 A1**
(43) Date of publication of application: **04.11.2026**
(21) Application number: 23962713.6
(22) Date of filing: 28.12.2023
(51) Int. Cl.: H04L 67/01, H04W 36/08

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); LIN, Xue, Dongguan, Guangdong 523860 (CN); CAO, Jin, Dongguan, Guangdong 523860 (CN); YANG, Yuanyuan, Dongguan, Guangdong 523860 (CN)
(74) Representative: RGTH
(86) International application number: PCT/CN2023/142925
(87) International publication number: WO 2025/138034

(57) **Abstract**

The present application relates to a communication method and device. The method comprises: receiving, from a source access network device, a Layer 1 (L1)/Layer 2 (L2) handover command, the L1/L2 handover command carrying indication information and a message verification code, the indication information being used for handover of a terminal to a target access network device, and the message verification code being used to verify the integrity of the L1/L2 handover command.

## Description

### TECHNICAL FIELD

The present disclosure relates to the communication field, and more particularly, to a communication method and device.

### BACKGROUND

LTM (L1/L2-Triggered Mobility) in existing technologies mainly involves L1/L2 signaling triggered in cell handover (switch) within a same base station, does not involve cell handover between base stations, and thus does not involve the relevant process for security parameter update. However, it is discussed in relevant protocols that inter-CU (Centralized Unit) LTM is to be introduced, and in inter-CU LTM, if lower-layer L1/L2 signaling (MAC CE) is used to transmit the security parameter or relevant indication information, security problems may arise. Therefore, how to ensure the security of a switch command transmitted through lower-layer signaling becomes a problem that needs to be solved.

### SUMMARY

The embodiments of the present disclosure provide a communication method and device.

The embodiments of the present disclosure provide a communication method performed by a terminal, including:
receiving a layer 1/layer 2 (L1/L2) switch command from a source access network device, where the L1/L2 switch command carries indication information and a message check code, the indication information is used for the terminal to switch to a target access network device, and the message check code is used for verifying integrity of the L1/L2 switch command.

The embodiments of the present disclosure provide a communication method performed by a source access network device, including:
sending a layer 1/layer 2 (L1/L2) switch command to a terminal, where the L1/L2 switch command carries indication information and a message check code, the indication information is used for the terminal to switch to a target access network device, and the message check code is used for verifying integrity of the L1/L2 switch command.

The embodiments of the present disclosure provide a terminal, including:
a first communication unit, configured to receive a layer 1/layer 2 (L1/L2) switch command from a source access network device, where the L1/L2 switch command carries indication information and a message check code, the indication information is used for the terminal to switch to a target access network device, and the message check code is used for verifying integrity of the L1/L2 switch command.

The embodiments of the present disclosure provide a source access network device, including:
a second communication unit, configured to send a layer 1/layer 2 (L1/L2) switch command to a terminal, where the L1/L2 switch command carries indication information and a message check code, the indication information is used for the terminal to switch to a target access network device, and the message check code is used for verifying integrity of the L1/L2 switch command.

By adopting the solutions provided in the embodiments, a message check code can be carried in an L1/L2 switch command used for indicating a terminal to switch to a target access network device, where the message check code is used for verifying the integrity of the L1/L2 switch command. In this way, a security protection mechanism is introduced in the L1/L2 handover process, so that the switch command message transmitted through lower-layer signaling can prevent tampering attacks, or eavesdropping attacks, thereby improving the security of the switch command transmitted through lower-layer signaling.

### BRIEF DESCRIPTION OF THE DRAWINGS

FIG. 1 is a schematic diagram of an application scenario according to the embodiments of the present disclosure.
FIG. 2 is a schematic flowchart of a communication method according to an embodiment of the present disclosure.
FIG. 3 is a schematic flowchart of a communication method according to another embodiment of the present disclosure.
FIG. 4 to FIG. 9 are multiple schematic flowcharts of a communication method according to an embodiment of the present disclosure in a single connectivity scenario or a dual connectivity scenario.
FIG. 10 is a schematic block diagram of a terminal according to an embodiment of the present disclosure.
FIG. 11 is a schematic block diagram of a source access network device according to an embodiment of the present disclosure.

### DETAILED DESCRIPTION

The technical solution of the embodiments of the present disclosure may be applied to various communication systems, for example: LTE (Long Term Evolution), LTE-A (Long Term Evolution-Advanced), NR (New Radio), evolution of NR, WLAN (Wireless Local Area Network), WiFi (Wireless Fidelity), or other communication systems, etc.

The embodiments of the present disclosure describe various embodiments in combination with a network device and a terminal, where the terminal may be mobile or fixed, and the terminal may also be referred to as a mobile station, a user unit, and the like. The terminal may be a station in a WLAN, and may be a terminal such as a smart terminal, a wireless modem, a notebook computer, a tablet computer, and the like. In the embodiments of the present disclosure, the terminal may be a VR terminal/an AR terminal, an industrial control terminal, a driverless terminal, a remote medical terminal, a smart grid terminal, a transportation safety terminal, a smart city terminal, or a smart home wireless terminal, etc. As an example but not a limitation, in the embodiments of the present disclosure, the terminal may also be a wearable device.

In the embodiments of the present disclosure, the network device may be a device for communicating with a terminal, the network device may be an access point in a WLAN, may be an evolved base station in LTE, or a relay station, or a vehicle-mounted device, a wearable device, and a network device (gNB) in an NR network or a network device in a future evolved PLMN (Public Land Mobile Network) network or a network device in a non-terrestrial network, and the like. As an example but not a limitation, in the embodiments of the present disclosure, the network device may have a mobility characteristic, for example, the network device may be a mobile device.

To facilitate understanding of the technical solutions of the embodiments of the present disclosure, relevant technologies of the embodiments of the present disclosure are described below, and the following relevant technologies as optional solutions may be combined arbitrarily with the technical solutions of the embodiments of the present disclosure, and all of which belong to the scope of protection of the embodiments of the present disclosure.

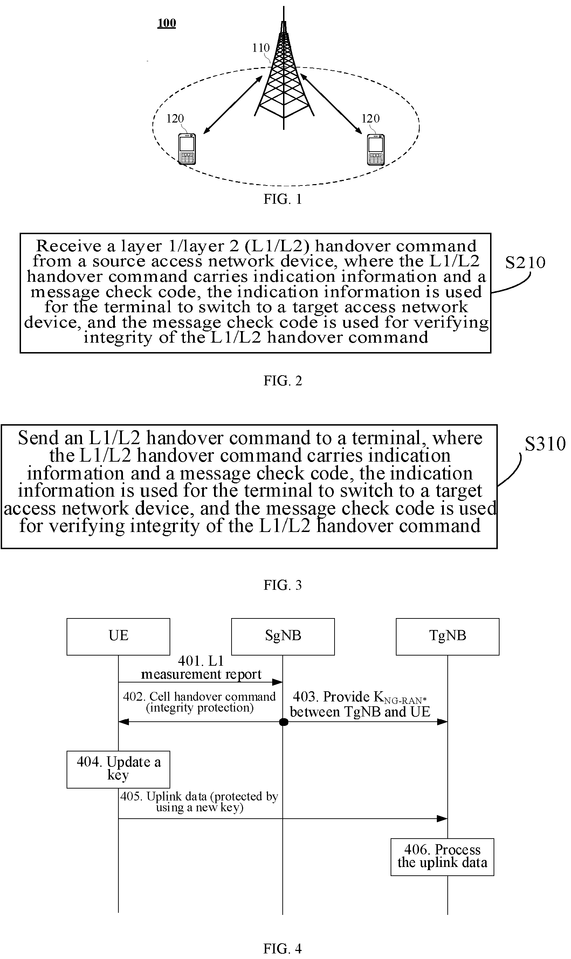

FIG. 1 exemplarily shows a communication system 100. The communication system includes a network device 110 and two terminals 120. In a possible implementation, the communication system 100 may include a plurality of network devices 110, and a coverage range of each network device 110 may include other numbers of terminals 120, which is not limited in the embodiments of the present disclosure. In a possible implementation, the communication system 100 may further include other network entities such as a mobility management entity, an access and mobility management function, and the like, which is not limited in the embodiments of the present disclosure. The network device may further include an access network device and a core network device. That is, the communication system may further include a plurality of core networks for communicating with the access network device. The access network device may be a base station of LTE, LTE-A, or NR systems. Taking the communication system shown in FIG. 1 as an example, the communication devices may include the network device and terminals having communication functions, the communication device may also include other devices in the communication system, such as other network entities including a network controller, a mobility management entity, and the like, which is not limited in the embodiments of the present disclosure.

FIG. 2 is a schematic flowchart of a communication method performed by a terminal according to an embodiment of the present disclosure. The method includes at least a part of the following content.

S210: receive a layer 1/layer 2 (L1/L2) switch command from a source access network device, where the L1/L2 switch command carries indication information and a message check code, the indication information is used for the terminal to switch to a target access network device, and the message check code is used for verifying integrity of the L1/L2 switch command.

FIG. 3 is a schematic flowchart of a communication method performed by a source access network device according to another embodiment of the present disclosure. The method includes at least a part of the following content.

S310: send an L1/L2 switch command to a terminal, where the L1/L2 switch command carries indication information and a message check code, the indication information is used for the terminal to switch to a target access network device, and the message check code is used for verifying integrity of the L1/L2 switch command.

The L1/L2 switch command may be carried by an MAC (Medium Access Control) CE (Control Element).

The L1/L2 switch command may alternatively be described as any one of L1/L2 signaling, or an L1 and/or L2 switch command, or a cell handover command (cell switch command), or the like, and all possible representations or names of the L1/L2 switch command are not limited or exhaustively listed here.

The message check code may be a messages integrity check code (MIC, Messages Integrity Code) or a message authentication code (MAC). It should be noted that, in the following, to facilitate distinguishing from MAC (Medium Access Control), MIC is used to represent the message check code in some examples, and these examples do not limit all possible types of the message check code.

In some possible implementations, in a scenario where the terminal establishes a single connectivity, the source access network device may be an access network device currently connected to the terminal, and the target access network device is an access network device to which the terminal for performing handover processing is to be switched.

The source access network device may alternatively be referred to as any one of a source base station, or a source gNB, or an SgNB, or a gNB, or the like; the target access network device may alternatively be referred to as any one of a target base station, or a target gNB, or a TgNB, or the like.

Before the terminal receives the L1/L2 switch command from the source access network device, it may further include: sending an L1/L2 measurement report to the source access network device. Correspondingly, before the source access network device sends the L1/L2 switch command to the terminal, it may further include: receiving the L1/L2 measurement report from the terminal; and determining a target access network device for the terminal based on the L1/L2 measurement report (or determining a target cell for the terminal based on the L1/L2 measurement report, and determining a target access network device to which the target cell belongs). A specific manner in which the source access network device determines the target cell and/or the target access network device based on the L1/L2 measurement report, is not limited in the embodiments.

For example, the content that may be included in the L1/L2 measurement report may be at least one of: measurement results corresponding to one or more candidate access network devices, measurement results corresponding to one or more candidate cells, or the like. The L1/L2 measurement report may alternatively be referred to as an L1 and/or L2 measurement report. This is only an exemplary description, and the embodiments do not limit or exhaustively list all contents that may be included in the L1/L2 measurement report.

The indication information is used for indicating at least one of: identifier information related to the target access network device, a security parameter, and security activation information.

The identifier information related to the target access network device may include at least one of: an identifier (ID) of the target access network device, index information of the target access network device, an identifier of a target cell, and index information of the target cell, where the target cell is one of one or more cells of the target access network device.

The identifier of the target cell may include at least one of: a cell identifier (Cell ID) of the target cell, and a PCI (Physical Cell Identifier) of the target cell.

The index information of the target access network device may be an index number (Index) or a number used only between the terminal and the source access network device to identify the target access network device. The index information of the target cell may be an index number (Index) or a number used only between the terminal and the source access network device to identify the target cell.

Optionally, processing by the source access network device may further include: sending first information to the terminal, where the first information includes at least one of: index information of each candidate access network device among one or more candidate access network devices, index information of each candidate cell among one or more candidate cells, a corresponding relationship between index information and an identifier of each candidate access network device, and a corresponding relationship between index information and an identifier of each candidate cell. The identifier of each candidate cell may include a cell ID of the candidate cell and/or a PCI of the candidate cell, and the like. Correspondingly, processing by the terminal may further include: receiving the first information from the source access network device.

Here, a processing timing for the source access network device to send the first information may be before the source access network device sends the L1/L2 switch command, and all possible timings for the source access network device to send the first information are not limited or exhaustively listed here.

A manner in which the source access network device generates the index information of each candidate access network device and/or the index information of each candidate cell, is not limited in the embodiments.

The security parameter may include a next hop chaining counter (NCC). A function of the NCC may be for the terminal to derive a security base key with the target access network device.

The manner in which the source access network device acquires the NCC may be that a core network device configure or send the NCC for the source access network device, or may be that the source access network device determines the NCC based on an NCC corresponding to a security base key between the source access network device and the terminal, or may be that the NCC is acquired or generated in other manners, which is not exhaustively listed or limited in the embodiments.

The security activation information may be used for indicating that the terminal activates security protection with the target access network device. Specifically, the security activation information may include at least one of: security algorithm identifier(s) supported and/or selected by the target access network device, an indication of whether to activate user plane integrity protection between the terminal and the target access network device, and an indication of whether to activate ciphering protection between the terminal and the target access network device.

The security algorithm includes at least one of: an integrity protection algorithm, an encryption algorithm (or an encryption/decryption algorithm). The security algorithm identifier of the target access network device may include at least one of: an identifier of an integrity protection algorithm of the target access network device, an identifier of an encryption algorithm (or an encryption/decryption algorithm) of the target access network device. Here, the integrity protection algorithm of the target access network device is used for integrity protection-related computing between the terminal and the target access network device; the encryption algorithm (or encryption/decryption algorithm) of the target access network device is used for encryption-related computing (for example, encryption and/or decryption processing) between the terminal and the target access network device.

The indication of whether to activate user plane integrity protection between the terminal and the target access network device may be indicated by a value of a first identifier; for example, when the value of the first identifier is a first value, it is used for indicating the terminal to activate user plane integrity protection with the target access network device; for example, when the value of the first identifier is a second value, it is used for indicating the terminal not to activate user plane integrity protection with the target access network device; as long as the first value and the second value are different, they are within the protection scope of the embodiments; for example, the first value may be 1 and the second value may be 0, or the first value may be 01 and the second value may be 10, and so on; and all possible values of the first value and the second value are not limited or exhaustively listed here. The first identifier may also be alternatively referred to as a user plane integrity protection identifier (UP integrity indication).

The indication of whether to activate ciphering protection between the terminal and the target access network device may be indicated by a value of a second identifier. For example, when the value of the second identifier is a third value, it is used for indicating the terminal to activate ciphering protection with the target access network device; for example, when the value of the second identifier is a fourth value, it is used for indicating the terminal not to activate ciphering integrity protection with the target access network device; as long as the third value and the fourth value are different, they are within the protection scope of the embodiments. The second identifier may also be alternatively referred to as a ciphering protection identifier (ciphering indication).

In some possible embodiments, the L1/L2 switch command is only for integrity protection.

On the source access network device side, the message check code is computed based on an integrity protection key shared with the terminal and first-part plaintext information. On the terminal side, processing after the terminal receives the L1/L2 switch command, may further include: computing a verification code based on an integrity protection key shared with the source access network device and first-part plaintext information; and verifying the integrity of the L1/L2 switch command based on the verification code and the message check code.

In this embodiment, all contents included in the indication information is plaintext information; specifically, the indication information may include at least one of: an identifier (ID) of the target access network device, index information of the target access network device, an identifier of a target cell, index information of the target cell, an NCC, a security algorithm identifier supported and/or selected by the target access network device, an indication of whether to activate user plane integrity protection between the terminal and the target access network device, and an indication of whether to activate ciphering protection between the terminal and the target access network device.

The first-part plaintext information included in the indication information may be all of plaintext information of the indication information, or a part of plaintext information of the indication information. The content type or information type that the first-part plaintext information of the indication information may include, may be default, specified by a protocol, or negotiated by both the terminal and the source access network device. As long as the content type or information type included in the first-part plaintext information of the indication information known or determined by the source access network device and the terminal is the same, it is within the protection scope of the embodiments. For example, the first-part plaintext information of the indication information may include at least one of: an identifier (ID) of the target access network device, index information of the target access network device, an identifier of a target cell, index information of the target cell, an NCC, etc. The embodiments does not limit or exhaustively list all contents that the first-part plaintext information may include.

The integrity protection key is one of: a first key, where the first key includes one of: a control plane integrity check key, a security base key, a user plane integrity check key, and a physical layer key; and a key computed based on the first key.

The security base key may also be referred to as an Access Stratum (AS) security base key; for example, it may be any one of K_{gNB} or K_{NG-RAN*} specified in relevant protocols, etc.; regarding the derivation manner of the security base key, the embodiments do not limit it.

The control plane integrity check key may specifically be an RRC (Radio Resource Control) layer integrity protection key; for example, it may be K_{RRCint} specified in a relevant protocol. The access stratum signaling plane integrity check key may be included in an NAS (Non-Access Stratum) security context. The control plane integrity check key may also be alternatively referred to as any one of: an access stratum signaling plane integrity check key, an access stratum signaling plane integrity key, an access stratum signaling plane integrity protection key, etc.; all possible names of the control plane integrity check key are not exhaustively listed here.

The user plane integrity check key may be K_{UPint}; the user plane integrity check key may be included in an AS security context. The user plane integrity check key may also be alternatively referred to as any one of: a user plane integrity protection key, a User Plane integrity protection key, a user plane integrity protection and check key, etc.; all possible names of the user plane integrity check key are not exhaustively listed here.

The physical layer key may be generated based on a feature of a physical layer channel between the terminal and the source access network device; regarding the specific generation manner of the physical layer key, the embodiments do not limit it; and exemplarily, the physical layer key may be represented as Kphy.

It should be understood that the above is only an exemplary description of the first key, and does not limit or exhaustively list all types of keys that may be the first key.

Optionally, the first key used by the terminal and the source access network device may be default by both of them or specified by a protocol. For example, the terminal and the source access network device may default to using the control plane integrity check key K_{RRCint} as the first key.

Optionally, the terminal may determine the first key. Processing by the terminal may further include: sending, by the terminal, an identifier of the first key to the source access network device. Processing by the source access network device may further include: receiving the identifier of the first key from the terminal; determining the first key based on the identifier of the first key. Here, as long as the timing for the terminal to send the identifier of the first key is before the terminal receives the L1/L2 switch command, it is within the protection scope of the embodiments.

Optionally, the source access network device may determine the first key. Processing by the source access network device may further include: sending an identifier of the first key to the terminal. Processing by the terminal may further include: receiving the identifier of the first key from the source access network device; determining the first key based on the identifier of the first key. The timing for the source access network device to send the identifier of the first key to the terminal is also not limited in the embodiments, and as long as the terminal can determine the first key before integrity protection verification, it is within the protection scope of the embodiments.

In an embodiment, the integrity protection key may be the first key. That is, the terminal and the source access network device may directly use the first key among shared multiple types of keys, as the integrity protection key. For example, if the first key is the control plane integrity check key K_{RRCint}, the K_{RRCint} may be directly used as the integrity protection key.

In an embodiment, the integrity protection key is computed based on the first key. In this embodiment, the integrity protection key may also be referred to as any one of: an MAC layer integrity protection key, an MAC layer integrity key, an MAC layer integrity protection key, etc.; and exemplarily, the integrity protection key may be represented as K_{MACint}.

It should be understood that, since the terminal and the source access network device should use the same key algorithm and same parameter to compute the integrity protection key, respectively, the integrity protection keys obtained by both should be the same theoretically; the embodiments no longer distinguish between the processing of the terminal and the source access network device computing their respective integrity protection key, but provide a unified description.

The key algorithm used for computing the integrity protection key may be a first algorithm, where the first algorithm may be referred to as a key algorithm (for example, which may be represented as N-MAC-int-alg) used for computing an MAC layer integrity protection key.

The first algorithm may be default by both of them, or specified by a protocol, for example, the first algorithm may include at least one of: a key derivation function (KDF), a first authentication function, a second authentication function, a third key generation function (for example, which may be represented as f3), a fourth key generation function (for example, which may be represented as f4), a fifth key generation function (for example, which may be represented as f5), a hash algorithm, Advanced Encryption Standard (AES), SNOW 3G (Snow Third Generation), and ZUC (ZUChongzhi).

Exemplarily, taking the first key as K_{gNB} as an example, computing the integrity protection key (K_{MACint}) based on the first key may be represented by the following formula: K_{MACint}=KDF(K_{gNB}).

Optionally, the integrity protection key is computed based on the first key and at least one of the following parameters: a first fixed value, a first algorithm type, a length of the first algorithm type, an identifier of the first algorithm, a length of the identifier of the first algorithm, an identifier of the terminal, and an identifier of the source access network device.

The first fixed value may be specified by a protocol, default, or pre-configured. The first fixed value may be represented as FC, for example, FC=0xXX.

The aforementioned first algorithm type may be represented by a type value, for example, the key algorithm used for computing the MAC layer integrity protection key is N-MAC-int-alg, and its corresponding type value may be 0xYY; and the length of the aforementioned first algorithm type may be represented by a specified radix, for example, may be hexadecimal.

The aforementioned identifier of the first algorithm may be specified by a protocol, or default. For example, the identifier of the first algorithm may include EIA-1/2/3, NIA-1/2/3, where EIA1 represents LTE (or 4G) integrity protection algorithm 1 (which may be Snow 3G), EIA2 represents LTE (or 4G) integrity protection algorithm 2 (which may be AES), EIA3 represents LTE (or 4G) integrity protection algorithm 3 (which may be ZUC), and NIA1 to NIA3 respectively represent NR (or 5G) integrity protection algorithm 1 to NR integrity protection algorithm 3, which are only an exemplary description and do not limit the identifier of the first algorithm.

Exemplarily, assuming the integrity protection key is represented as K-mac-int, an input key for computing K-mac-int is KgNB (that is, the first key is the security base key), and input parameters include:
a first fixed value FC = 0xXX;
P0 = algorithm type distinguisher (algorithm type) value, where P0 in this example may be a value of the first algorithm type (such as 0xYY);
L0 = length of algorithm type distinguisher, where L0 in this example represents a length of the first algorithm type, that is, a length of the value P0 of the type of the aforementioned MAC layer integrity protection algorithm;
P1 = algorithm identity (EIA-1/2/3, NIA-1/2/3), where P1 in this example represents an identifier of the first algorithm;
L1 = length of algorithm identity, where L1 in this example represents a length of the identifier of the first algorithm, and for example, may be 0x00 or 0x01, and so on.

The integrity protection algorithm for computing the message check code by the source access network device should be the same as the integrity protection algorithm for computing the verification code at the terminal side.

Optionally, the integrity protection algorithm may refer to an integrity protection algorithm supported and/or selected by the source access network device, and a configuration manner or configuration timing on the terminal side for the integrity protection algorithm supported and/or selected by the source access network device is not limited here.

Taking the first-part plaintext information of the indication information including the NCC as an example, the message check code may be computed by the following formula: *MIC* = *MAC*(*K*_{*RRC*int}, *NCC*) where *MIC* represents the message check code, *MAC*() represents the integrity protection algorithm, and *K*_{*RRC*int} represents the integrity protection key.

It should also be pointed out that the aforementioned processing of computing the message check code is only an exemplary description, and in actual processing, the first-part plaintext information may include the NCC but is not limited to the NCC, for example, the first part plaintext data may also include an identifier (ID) of the target access network device, and so on, which is not limited or exhaustively listed here.

Optionally, the computation of the message check code may include: performing a hash computation on the integrity protection key to obtain a first hash value, and obtaining the message check code based on the first hash value XOR the first-part plaintext information of the indication information.

Preferably, the first-part plaintext information of the indication information includes a parameter. Preferably, the parameter included in the first-part plaintext information of the indication information is the NCC. For example, the first-part plaintext information of the indication information may include the NCC; correspondingly, the processing of computing the message check code may be represented as: *MIC* = *H*(*K*_{*RRC*int}) ⊕ *NCC* , where *MIC* represents the message check code, *H*() represents the hash computation, and *K*_{*RRC*int} represents the integrity protection key.

It should be pointed out that, in a case where the processing of computing the message check code is preferably for integrity protection processing for the NCC, identifier information related to the target access network device in the indication information may be index information of the target access network device and/or index information of a target cell. That is, the source access network device hides identifiers of access network devices and identifiers of cells, by pre-configuring first information to synchronize index information corresponding to each access network device and cell with the terminal, so that integrity protection is no longer performed on the index information of the target access network device and/or the index information of the target cell in the processing of computing the message check code.

It should also be pointed out that, in a case where the processing of computing the message check code is preferably for integrity protection processing for the NCC, the indication information may not include security activation information, where the security activation information may be configured to the terminal in a subsequent process, and the embodiments does not limit a timing or procedure in which the security activation information may be configured.

The terminal verifying the integrity of the L1/L2 switch command based on the verification code and the message check code, may include at least one of: in a case where the verification code and the message check code are consistent, determining that the integrity verification of the L1/L2 switch command is successful; in a case where the verification code and the message check code are inconsistent, determining that the integrity verification of the L1/L2 switch command fails.

In some possible embodiments, integrity protection and ciphering protection are performed on the L1/L2 switch command.

On the source access network device side, the indication information includes first-part plaintext information, and the message check code is computed based on an integrity protection key shared with the terminal and the first-part plaintext information included in the indication information. And, on the source access network device side, the indication information further includes ciphertext information, where the ciphertext information is computed based on an encryption key shared with the terminal and second-part plaintext information, and the second-part plaintext information is different from the first-part plaintext information.

Correspondingly, on the terminal side, the method further includes: computing a verification code based on an integrity protection key shared with the source access network device and the first-part plaintext information; and verifying the integrity of the L1/L2 switch command based on the verification code and the message check code. And, on the terminal side, the method further includes: computing the second-part plaintext information based on an encryption key shared with the source access network device and the ciphertext information, where the second-part plaintext information is different from the first-part plaintext information.

Here, the ciphertext information is computed based on the encryption key shared with the terminal and the second-part plaintext information may means that: the ciphertext information is computed by encrypting the second-part plaintext information based on the encryption key shared with the terminal. The terminal computes the second-part plaintext information based on the encryption key shared with the source access network device and the ciphertext information may means that: the terminal decrypts the ciphertext information based on the encryption key shared with the source access network device to obtain the second-part plaintext information.

The encryption/decryption algorithm of the source access network device should be the same as or correspond to the encryption/decryption algorithm on the terminal side. Exemplarily, the encryption/decryption algorithm may refer to an encryption/decryption algorithm supported and/or selected by the source access network device, and a configuration manner or configuration timing on the terminal side for the encryption/decryption algorithm supported and/or selected by the source access network device is not limited here.

The encryption key is one of: a second key, where the second key includes one of: a control plane encryption key, a security base key, a user plane encryption key, a physical layer key; or a key computed based on the second key.

The control plane encryption key may specifically be an RRC layer encryption key, and for example, may be K_{RRCenc} specified in a relevant protocol. The control plane encryption key may be included in an NAS (Non-Access Stratun) security context.

The user plane encryption key may be K_{UPenc}, and the user plane encryption key may be included in an AS security context.

It should be understood that the above is only an exemplary description of the second key; in actual processing, the second key may also be another type of key generated in another manner and shared by the terminal and the source access network device, and all types of keys that may be the second key are not limited or exhaustively listed here.

Optionally, the second key used by the terminal and the source access network device may be default for both of them or specified by a protocol.

Optionally, the terminal may determine the second key. The processing by the terminal may further include: sending, by the terminal, an identifier of the second key to the source access network device. The processing by the source access network device may further include: receiving the identifier of the second key from the terminal; and determining the second key based on the identifier of the second key. Here, as long as the timing for the terminal sending the identifier of the second key is before the terminal receives the L1/L2 switch command, it is within the scope of protection of the embodiments.

Optionally, the source access network device may determine the second key. The processing by the source access network device may further include: sending an identifier of the second key to the terminal. The processing by the terminal may further include: receiving the identifier of the second key from the source access network device, and determining the second key based on the identifier of the second key. The timing for the source access network device sending the identifier of the second key to the terminal may be before the source access network device sends the L1/L2 switch command, or the identifier of the second key may be carried in the aforementioned indication information, and as long as the terminal can determine the second key before integrity protection verification, it is within the scope of protection of the embodiments.

In an embodiment, the encryption key may be the second key. That is, the terminal and the source access network device may directly use the second key among the shared multiple types of keys, as the integrity protection key.

In an embodiment, the encryption key is computed based on the second key. In the embodiments, the encryption key may also be referred to as any one of an MAC layer encryption key, a MAC layer encryption/decryption key, etc., for example, the encryption key may be denoted as K_{MACenc}.

It should be understood that since the terminal and the source access network device should use the same key algorithm and the same parameter to compute the encryption key respectively, the encryption keys obtained by both of them should be the same theoretically, and the embodiments do not distinguish between the processing of the terminal and the source access network device computing their respective encryption keys, but provide a unified description.

The key algorithm used for computing the encryption key may be a second algorithm, and the second algorithm may also be referred to as a key algorithm (for example, which may be denoted as N-MAC-enc-alg) used for computing the MAC layer encryption key. The second algorithm is default or specified by a protocol; for example, the second algorithm may include at least one of: KDF, a first authentication function, a second authentication function, a third key generation function, a fourth key generation function, a fifth key generation function, a hash algorithm, AES, SNOW 3G, and ZUC.

For example, taking the second key as K_{gNB} as an example, computing the encryption key (K_{MACenc}) based on the second key may be represented by the following formula: K_{MACenc} = KDF(K_{gNB}).

Optionally, the encryption key is computed based on the second key and at least one of the following parameters: a second fixed value, a second algorithm type, a length of the second algorithm type, an identifier of the second algorithm, a length of the identifier of the second algorithm, an identifier of the terminal, an identifier of the source access network device.

The second fixed value may be specified by a protocol, default, or preconfigured. The second fixed value may be denoted as FC, for example, FC = 0xXX.

The aforementioned second algorithm type may be represented by a type value, for example, the second algorithm is N-MAC-enc-alg, and its corresponding type value may be 0xZZ; the length of the aforementioned second algorithm type may be represented by a specified radix, for example, may be hexadecimal; the identifier of the aforementioned second algorithm may be specified by a protocol or default, for example, may include EIA-1/2/3, NIA-1/2/3, and the description thereof is the same as that in the above embodiments, and is not repeated here.

For example, assuming the encryption key is denoted as K-mac-enc, the input key for computing K-mac-mac is KgNB (i.e., the second key is the security base key), and the input parameters include:
a second fixed value FC = 0xXX;
P0 = an algorithm type distinguisher (algorithm type) value, where P0 in this example represents the value of the second algorithm type, which may be 0xZZ;
L0 = length of algorithm type distinguisher, where L0 in this example represents the length of the second algorithm type;
P1 = an algorithm identity (EIA-1/2/3, NIA-1/2/3), where P1 in this example represents the identifier of the second algorithm;
L1 = length of algorithm identity, where L1 in this example represents the length of the identifier of the second algorithm, for example, may be 0x00 or 0x01, etc.

It should be pointed out that the embodiments of the present disclosure are only an exemplary description, and in actual processing, more other parameters and other values may also be adopted, and for brevity, the embodiments do not list exhaustively .

In some embodiments, the content included in the indication information is: first-part plaintext information, and ciphertext information. The second-part plaintext information used for computing the ciphertext information is different from the first-part plaintext information included in the indication information, and the message check code is computed based on the first-part plaintext information only.

In the embodiments, the first-part plaintext information included in the indication information is a part of plaintext information of the indication information. For example, the second-part plaintext information may include at least one of an identifier (ID) of the target access network device, index information of the target access network device, an identifier of a target cell, index information of the target cell, and security activation information; and the first-part plaintext information may include a security parameter (such as an NCC). It should be understood that the above is only an exemplary description, and all contents that may be included in the first-part plaintext information and the second-part plaintext information are not limited or exhaustively listed here.

The order of the processing of computing the message check code and the processing of computing the ciphertext information performed on the source access network device side, and the order of the processing of verifying the message check code and the processing of decrypting the ciphertext information performed on the terminal side in the example, are not limited in the embodiments.

In some embodiments, the source access network device may compute the message check code in combination with the second-part plaintext information or the ciphertext information.

On the source access network device side, the message check code is computed based on an integrity protection key shared with the terminal, the first-part plaintext information, and one of the following information: the second-part plaintext information and the ciphertext information. Correspondingly, on the terminal side, computing the verification code based on an integrity protection key shared with the source access network device and first-part plaintext information, includes: computing the verification code based on the integrity protection key shared with the source access network device, the first-part plaintext information, and one of the following information: the second-part plaintext information and the ciphertext information.

Optionally, the source access network device side first performs integrity protection processing and then performs encryption processing, that is, the message check code is computed based on an integrity protection key shared with the terminal, the first-part plaintext information, and the second-part plaintext information. The processing by the source access network device may include: computing the message check code based on the integrity protection key, the first-part plaintext information, and the second-part plaintext information; computing ciphertext information based on the encryption key and the second-part plaintext information.

The processing after the terminal side receives the L1/L2 switch command may include: decrypting the ciphertext information included in the indication information based on the encryption key, to obtain second-part plaintext information; computing the verification code based on an integrity protection key, the first-part plaintext information included in the indication information, and the second-part plaintext information; and verifying the integrity of the switch command based on the verification code and the message check code.

Except that the second-part plaintext information is added when the source access network device computes the message check code, the remaining processing is the same as the related processing of computing the message check code in the above embodiments, and therefore it is not repeated. Correspondingly, except that the second-part plaintext information is added in the processing of computing the verification code on the terminal side, the remaining processing is also the same as the related processing of computing the verification code in the above embodiments, and it is not repeated as well.

Optionally, the source access network device side first performs encryption processing and then performs integrity protection processing, that is, the message check code is computed based on an integrity protection key shared with the terminal, the first-part plaintext information, and the ciphertext information. The processing by the source access network device may include: computing ciphertext information based on an encryption key shared with the terminal and second-part plaintext information; computing the message check code based on an integrity protection key shared with the terminal, the first-part plaintext information, and the ciphertext information.

The processing after the terminal side receives the L1/L2 switch command may include: computing the verification code based on an integrity protection key, the first-part plaintext information, and the ciphertext information; determining that integrity verification of the switch command is successful in a case where the verification code and the message check code are consistent; decrypting the ciphertext information included in the indication information based on the encryption key, to obtain second-part plaintext information.

In this example, except that the ciphertext information is added when the source access network device computes the message check code, the remaining processing is the same as the related processing for computing the message check code in the above embodiments, and therefore it is not repeated. Correspondingly, except that the ciphertext information is added in the processing of computing the verification code at the terminal side, the remaining processing is also the same as the related processing for computing the verification code in the above embodiments, and it is not repeated as well.

In some embodiments, the content included in the indication information is ciphertext information.

Optionally, at the source access network device side, encryption processing is performed first, and then integrity protection processing is performed. At the source access network device side, the message check code is computed based on an integrity protection key shared with the terminal and ciphertext information. The ciphertext information is computed based on an encryption key shared with the terminal and first-part plaintext information.

At the terminal side, the method further includes: computing a verification code based on an integrity protection key shared with the source access network device and ciphertext information; and verifying the integrity of the switch command based on the verification code and the message check code. The method further includes: computing first-part plaintext information based on an encryption key shared with the source access network device and the ciphertext information.

In the embodiments, the first part plaintext data may be at least one of: an identifier (ID) of the target access network device, index information of the target access network device, an identifier of a target cell, index information of the target cell, an NCC, a security algorithm identifier supported and/or selected by the target access network device, an indication of whether to activate user plane integrity protection between the terminal and the target access network device, and an indication of whether to activate ciphering protection between the terminal and the target access network device.

Specifically, the processing for generating the L1/L2 switch command by the source access network device may include: encrypting the first-part plaintext information based on an encryption key shared with the terminal, to obtain ciphertext information; computing the message check code based on an integrity protection key shared with the terminal and the ciphertext information; using the ciphertext information as the indication information; adding the indication information and the message check code to the L1/L2 switch command.

At the terminal side, the processing after receiving the L1/L2 switch command may include: computing the verification code based on the integrity protection key and the ciphertext information included in the indication information; determining that integrity verification of the switch command is successful in a case where the verification code and the message check code are consistent; decrypting the ciphertext information included in the indication information based on an encryption key shared with the source access network device, to obtain first-part plaintext information.

The integrity protection algorithm for computing the message check code by the source access network device should be the same as the integrity protection algorithm for computing the verification code at the terminal side.

Optionally, the integrity protection algorithm may refer to an integrity protection algorithm supported and/or selected by the source access network device, and a configuration manner or configuration timing on the terminal side for the integrity protection algorithm supported and/or selected by the source access network device is not limited here. For example, the following formula may be used to compute the message check code: *MIC*=*MAC*(*K*_{*RRC*i*nt*},ciphertext information)^{,} where the ciphertext information is computed based on first-part plaintext information, and meanings of other parameters in the formula are the same as those in the above embodiments, and are not repeated.

Optionally, the computation of the message check code may include: performing hash calculation on the integrity protection key to obtain a first hash value, obtaining the message check code based on the first hash value XOR the ciphertext information. For example, the processing for computing the message check code may be represented as: *MIC*=*H*(*K_{RRCint}*)⊕ciphertext information, and meanings of various parameters in the formula are the same as those in the above embodiments, and therefore are not repeated. It should be noted that in this example, the ciphertext information may preferably be obtained by encryption for the NCC, that is, the first part plaintext data includes the NCC. However, in this example, the first part plaintext data may also not be limited to the NCC, for example, it may also include identifier information related to the target access network device and/or security activation information.

It should also be noted that in a case where the indication information includes, in addition to the ciphertext information, second-part plaintext information, the source access network device may further compute the message check code in combination with the second-part plaintext information in addition to the ciphertext information. On the terminal side, the verification code is computed based on the integrity protection key, the ciphertext information included in the indication information, and the second-part plaintext information. In the embodiments, the specific computation for encryption and specific computation for the message check code at the source access network device side are similar to those in the above embodiments, and related processing of decryption processing, computing the verification code, and verification at the terminal side are also similar to those in the above embodiments, and therefore they are not repeated.

Optionally, at the source access network device side, integrity protection processing is performed first, and then encryption processing is performed. At the source access network device side, the message check code is computed based on an integrity protection key shared with the terminal and first-part plaintext information.

At the terminal side, the method further includes: computing a verification code based on an integrity protection key shared with the source access network device and first-part plaintext information; and verifying the integrity of the L1/L2 switch command based on the verification code and the message check code. The indication information includes ciphertext information, the method further includes: computing first-part plaintext information based on an encryption key shared with the source access network device and the ciphertext information.

Specifically, the processing for generating the L1/L2 switch command by the source access network device may include: computing the message check code based on an integrity protection key shared with the terminal and first-part plaintext information; encrypting first-part plaintext information based on an encryption key shared with the terminal to obtain ciphertext information; using the ciphertext information as the indication information; and adding the indication information and the message check code to the L1/L2 switch command.

At the terminal side, the processing after receiving the L1/L2 switch command may include: decrypting the ciphertext information included in the indication information based on an encryption key shared with the source access network device to obtain first-part plaintext information; computing a verification code based on an integrity protection key shared with the source access network device and the first-part plaintext information; and verifying integrity of the L1/L2 switch command based on the verification code and the message check code.

It should also be noted that in a case where the indication information includes, in addition to the ciphertext information, second-part plaintext information, the source access network device may compute the message check code in combination with the second-part plaintext information in addition to the first-part plaintext information. At the terminal side, the verification code is computed based on an integrity protection key shared with the source access network device, first-part plaintext information, and second-part plaintext information.

In the embodiments, the specific computation for encryption and specific computation for the message check code at the source access network device side are similar to those in the above embodiments, and related processing of decryption processing, computing the verification code, and verification at the terminal side are also similar to those in the above embodiments, and therefore it is not repeated.

In some embodiments, at the source access network device side, the method further includes: sending a security base key between the target access network device and the terminal, to the target access network device. Correspondingly, the processing by the target access network device may further include: receiving the security base key between the target access network device and the terminal, from the source access network device.

The security base key (e.g., K_{NG-RAN*}) between the target access network device and the terminal may be computed based on an NCC. Regarding a manner for the source access network device computing the security base key between the target access network device and the terminal, the embodiments do not limit it. As long as a timing for the source access network device to send the security base key to the target access network device is after the source access network device receives the L1/L2 measurement report, it is within the scope of protection of the embodiments.

The processing after receiving the L1/L2 switch command at the terminal side may further include: in a case where integrity verification of the switch command is determined to be successful, sending uplink data (UL Data) to the target access network device. Correspondingly, the processing by the target access network device may further include: receiving uplink data from the terminal.

If the indication information is used for indicating activating user plane integrity protection between the terminal and the target access network device, the terminal may perform integrity protection on uplink data based on the integrity protection algorithm supported and/or used by the target access network device, and send the uplink data. The uplink data may be uplink encrypted data or uplink plaintext data, both of which are within the scope of protection of the embodiments.

If the indication information is used to activate ciphering protection between the terminal and the target access network device, the uplink data is uplink encrypted data, and the uplink encrypted data may be obtained by the terminal performing encryption computation on uplink plaintext data based on an encryption algorithm supported and/or used by the target access network device.

It should also be noted that, before the terminal side sends uplink data to the target access network device, it may compute a security base key between the terminal and the target access network device based on the NCC; and based on the security base key between the terminal and the target access network device, compute an access stratum (AS) key with the target access network device, for example, including at least one of: an integrity protection key between the terminal and the target access network device, an encryption key between the terminal and the target access network device. Correspondingly, integrity protection is performed on the uplink data based on an integrity protection algorithm supported and/or used by the target access network device and the integrity protection key between the terminal and the target access network device, and then the uplink data is sent, and/or encryption is performed on the uplink plaintext data based on an encryption algorithm supported and/or used by the target access network device and the encryption key between the terminal and the target access network device.

Optionally, for the L1/L2 switch command that enables integrity protection, or encryption and integrity protection, the terminal may perform integrity verification and/or decryption processing at the MAC layer. Optionally, for the L1/L2 switch command that enables integrity protection, or encryption and integrity protection, the terminal may transfer the received MAC CE to the PDCP layer for integrity verification and/or decryption processing.

An exemplary description of the solution provided in the embodiments is provided in conjunction with FIG. 4, where the scenario illustrated in FIG. 4 involves adding integrity protection at the MAC layer, specifically including:
step 401: the UE reports an L1 measurement report to the SgNB;
step 402: the SgNB sends a cell handover command (i.e., the aforementioned L1/L2 switch command) to the UE, where the cell handover command is an integrity-protected command, i.e., carrying a message check code.

That is, during the inter-CU LTM process, the SgNB initiates the cell handover command to the UE, where the cell handover command includes at least one of: a TgNB identifier, index information of the TgNB, a permanent identifier PCI of a target cell, index information of a target cell (e.g., a candidate configuration index, and the index indicates which candidate configuration cell the UE should switch to), a security parameter NCC, a security algorithm identifier supported/selected by a target base station, an identifier for indicating the UE to activate user plane integrity protection or ciphering protection. The cell handover command may trigger the UE to subsequently switch to the target base station. In order to protect the cell handover command message carried by the MAC CE, integrity protection between the UE and the SgNB may be enabled, thereby preventing the security parameter NCC and/or security algorithm information from being tampered with, which leads to a switch failure of the UE.

Step 403: the SgNB provides K_{NG-RAN*} between the TgNB and the UE to the TgNB. Furthermore, the TgNB may also compute an integrity protection key and/or an encryption key between the UE and the TgNB, and so on.

Step 404: the UE updates the key. Specifically, the UE updates the K_{NG-RAN*} with the TgNB; furthermore, the UE may also update the integrity protection key and/or the encryption key between the UE and the TgNB, and so on, which are not exhaustively listed or limited here.

Step 405: the UE sends uplink data to the TgNB, where the uplink data may be protected by using a new key (the new key may be, for example, at least one of: K_{NG-RAN*}, the integrity protection key between the UE and the TgNB, the encryption key between the UE and the TgNB).

Step 406: the TgNB processes the uplink data.

It should be pointed out that, if the SgNB configures information of a candidate gNB or a candidate cell to the UE before performing LTM, the SgNB may generate index information for the candidate gNB or the candidate cell, that is, in the cell switch command message, the (permanent) identifier of the candidate gNB and candidate cell may not be transmitted, but rather the index information. In addition, this example does not limit the order of the aforementioned step 402 and step 403; step 402 may be performed before step 403, or step 403 may be performed before step 402.

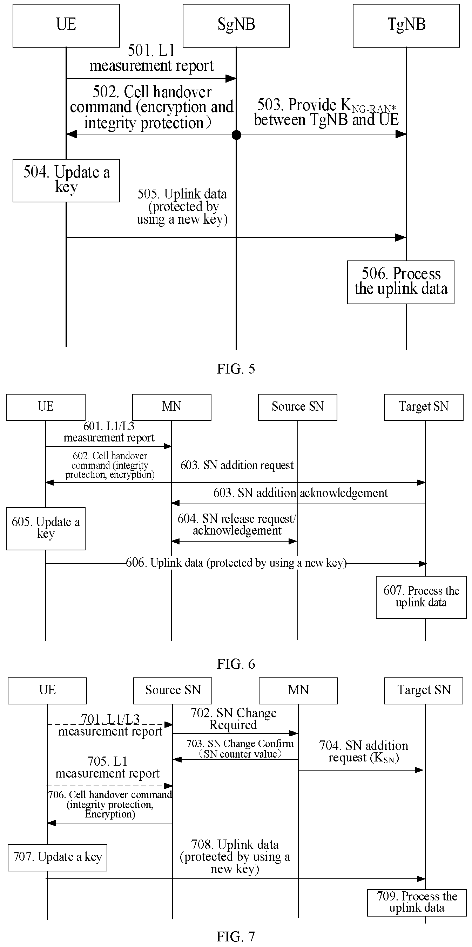

An exemplary description of the solution provided in the embodiments is provided in conjunction with FIG. 5, where the scenario illustrated in FIG. 5 involves adding encryption and integrity protection at the MAC layer. It specifically includes the following steps.

Step 501 is the same as step 401, and will not be repeated.

Step 502: the SgNB sends a cell handover command (i.e., the aforementioned L1/L2 switch command) to the UE, where the cell handover command is a command in which encryption and integrity protection are performed on plaintext information, i.e., the command carries a message check code and the indication information includes ciphertext information.

The difference between this step and step 402 lies only in that, to protect the cell handover command message carried by the MAC CE, encryption and integrity protection between the UE and the SgNB are enabled. Regarding the content indicated by the cell handover command, it is similar to that in step 402, and thus will not be repeated.

Step 503 to step 506 are the same as step 403 to step 406, and will not be repeated.

In some possible implementations, in a scenario where the terminal establishes dual connectivity (e.g., NR-DC (New Radio-Dual Connectivity), or MR-DC (Multi-Radio Dual Connectivity)), the target access network device includes at least one of: a target master access network device to which the terminal for performing handover processing is to switch, and a target secondary access network device to which the terminal for performing handover processing is to switch.

In an embodiment, the master access network device remains unchanged and the secondary access network device is switched.

In this embodiment, the source access network device is a master access network device; the master access network device may be referred to as any one of a master base station, or an MN (Master Node), or a Source MN, etc. The source access network device, i.e., the master access network device, is not switched; a function of the master access network device is mainly to send the L1/L2 switch command to the terminal, where the L1/L2 switch command is used for indicating the terminal to switch from a source secondary access network device to a target secondary access network device. The source secondary access network device may be referred to as any one of a source secondary base station, or a source SN (Secondary Node), or a Source SN, etc. The target secondary access network device may be referred to as any one of a target secondary base station, or a target SN, or a Target SN, etc.

Before the terminal receives the L1/L2 switch command from the master access network device, it may further include: sending an L1/L3 measurement report to the master access network device. Correspondingly, before the master access network device sends the L1/L2 switch command to the terminal, it may further include: receiving the L1/L3 measurement report from the terminal; determining a target secondary access network device for the terminal based on the L1/L3 measurement report. The embodiments does not limit the content that may be carried by the L1/L3 measurement report, and the specific manner in which the master access network device determines the target secondary access network device based on the L1/L3 measurement report.

The indication information is used for indicating at least one of: identifier information related to the target access network device, a security parameter, and security activation information.

The security parameter may include an SN counter (counter value). A function of the SN counter may be for the terminal to derive a security key with the target secondary access network device, where the security key may be Ksn. The embodiments do not limit the manner in which the source access network device acquires or determines the SN counter.

The relevant description of each of contents within the identifier information related to the target access network device and the security activation information is similar to those in the above embodiments, and the difference only lies in replacing the target access network device in the above embodiments with the target secondary access network device in these embodiments, and therefore, the description is not repeated.

In the embodiments, the integrity protection and/or encryption processing performed on the L1/L2 switch command by the master access network device, and the corresponding integrity verification and/or decryption processing performed on the L1/L2 switch command by the terminal, are all similar to various possible processing between the source access network device and the terminal in the above embodiments related to single connectivity, and therefore, the description is not repeated.

On the the master access network device side, the method further includes: sending a security key Ksn between the target secondary access network device and the terminal to the target secondary access network device (which may be carried by an SN Addition Request); receiving acknowledgement information from the target secondary access network device (which may be carried by an SN Addition Acknowledge); sending an SN Release Request to the source secondary access network device, and receiving an SN Release Acknowledge from the source secondary access network device. Correspondingly, processing by the target secondary access network device may further include: receiving the security key Ksn between the target secondary access network device and the terminal from the master access network device; sending acknowledgement information to the master access network device.

The security key Ksn between the target secondary access network device and the terminal may be computed based on the SN counter. The embodiments do not limit the manner in which the master access network device computes the Ksn. As long as the timing for the master access network device to send the Ksn to the target secondary access network device is after the master access network device receives the L1/L3 measurement report, it is within the scope of protection of the embodiments.

The processing after the terminal side receives the L1/L2 switch command may further include: in a case where integrity verification of the L1/L2 switch command is determined to be successful, sending uplink data (UL Data) to the target secondary access network device. Correspondingly, the processing after the target secondary access network device receives the security key Ksn may further include: receiving the uplink data from the terminal.

If the indication information is used for indicating activating user plane integrity protection between the terminal and the target secondary access network device, the terminal may perform integrity protection on the uplink data based on an integrity protection algorithm supported and/or used by the target secondary access network device and then send the uplink data. The uplink data may be uplink encrypted data or uplink plaintext data, both of which are within the scope of protection of the embodiments.

The processing of integrity protection and/or encryption on the uplink data by the terminal is similar to that in the above embodiments, and the difference only lies in that the target access network device in the above embodiments is replaced with the target secondary access network device in these embodiments, and therefore, the description is not repeated.

Before sending uplink data to the target secondary access network device, the terminal side may further compute the security key Ksn between the terminal and the target secondary access network device based on the SN Counter; and/or based on the security key between the terminal and the target secondary access network device, compute at least one of: an integrity protection key between the terminal and the target secondary access network device, and an encryption key between the terminal and the target secondary access network device. Correspondingly, the terminal performs integrity protection on the uplink data based on an integrity protection algorithm supported and/or used by the target access network device and the integrity protection key between the terminal and the target access network device, and sends the uplink data, and/or encrypts the uplink plaintext data based on an encryption algorithm supported and/or used by the target access network device and the encryption key between the terminal and the target access network device.

In conjunction with FIG. 6, an exemplary description of the solution provided in the embodiments is provided, and FIG. 6 shows a case of a same MN and switching between different SNs (triggered by the MN) in a dual connectivity scenario. It specifically includes the following steps.

Step 601: the UE reports an L1/L3 measurement report to the MN;

Step 602: the MN sends a cell handover command (i.e., the aforementioned L1/L2 switch command) to the UE, where the cell handover command is an integrity-protected and encrypted command.

That is, the MN triggers the UE to switch from the source secondary base station source SN to a target secondary base station target SN through the cell handover command. FIG. 6 shows a process of performing LTM, and does not limit other processes of LTM, such as LTM preparation, early sycn (early synchronization), and an LTM completion process. The cell handover command includes at least one of: a security parameter (SN counter) for generating a new Ksn, a security algorithm identifier supported/selected by the target SN, an identifier for indicating the UE to activate user plane integrity protection or ciphering protection, an identifier of the target SN or index information of the target SN, and an identifier of a target candidate cell or index information of the target candidate cell.

Step 603: the MN provides K_{SN} between the Target SN and the UE to the Target SN through an SN addition request; the MN receives an SN addition acknowledgement fed back from the Target SN. Here, the Target SN may further compute an integrity protection key and/or an encryption key between the UE and the Target SN based on Ksn, and so on.

Specifically, the MN providing K_{SN} between the Target SN and the UE to the Target SN through the SN addition request, may include: the MN generating a new key Ksn by using a new SN counter, and sending a UE context to the Target SN through the SN addition request to provide the UE context, where the UE context includes the key Ksn used between the target SN and the UE.

Step 604: the MN interacts an SN release request/acknowledgement with the Source SN.

Step 605: the UE updates the key. Specifically, the UE generates the key Ksn with the target SN, according to the SN counter included in the received cell handover command and the key KgNB with the MN, and uses the Ksn as the key KgNB with the SN. The UE uses a security algorithm selected by the target SN to generate an AS key, and correspondingly enables protection of the UP plane according to the indication of the target SN.

Step 606: the UE sends uplink data to the Target SN, where the uplink data may be protected by using the new key.

Step 607: the Target SN processes the uplink data.

It should be noted that if the MN configures information of a candidate SN or a candidate cell to the UE before performing LTM, the MN may generate index information for the candidate SN or the candidate cell, that is, in the cell switch command message, the (permanent) identifier of the candidate SN and the candidate cell may not be transmitted, but rather the index information. The SN counter is a value, and may also be referred to as an SN counter value, an sk counter, or an sk counter value. The L1/L3 measurement report may be an L1 measurement report, or an L3 measurement report during an LTM preparation phase. The order of performing step 602, step 603, and step 604 is not limited, step 602 may be performed first and then step 603 and step 604; or step 603 and step 604 may be performed first and then step 602; the order of performing step 603 and step 604 is also not limited, step 603 may be performed first and then step 604, and in some possible examples, step 604 may be performed first and then step 603.

In an embodiment, the master access network device remains unchanged and the secondary access network device is switched. The source access network device is a source secondary access network device; the L1/L2 switch command is used for indicating the terminal to switch from the source secondary access network device to the target secondary access network device.

Before the terminal receives the L1/L2 switch command from the source secondary access network device, it may further include: sending an L1/L3 measurement report to the source secondary access network device. Correspondingly, before the source secondary access network device sends the L1/L2 switch command to the terminal, it may further include: receiving the L1/L3 measurement report from the terminal.

Optionally, the L1/L3 measurement report may include an L3 measurement report and an L1 measurement report.

The terminal may report the L3 measurement report during the LTM preparation phase. After the source secondary access network device receives the L3 measurement report, it may include: determining the target secondary access network device for the terminal based on the L1/L3 measurement report; sending an SN Change Required to the master access network device, in which an identifier or an index of the target secondary access network device may be carried; receiving an SN Change Confirm from the master access network device, where an SN counter value may be carried in the SN Change Confirm. The processing by the master access network device may include: receiving the SN Change Required; sending the SN Change Confirm to the source secondary access network device, where an SN counter value may be carried in the SN Change Confirm; sending an SN addition request to the target secondary access network device, where Ksn between the target secondary access network device and the terminal may be carried in the SN addition request.

The terminal may report an L1 measurement report in the phase of performing LTM. After the source secondary access network device receives the SN Change Confirm from the master access network device, it may further include: receiving the L1 measurement report from the terminal, and sending the L1/L2 switch command to the terminal.

Optionally, the L1/L3 measurement report may include an L1 measurement report.

The terminal may report an L1 measurement report in the phase of performing LTM. The processing after the source secondary access network device receives the L1 measurement report may include: determining the target secondary access network device for the terminal based on the L1 measurement report; sending an SN Change Required to the master access network device, in which an identifier or an index of the target secondary access network device may be carried; receiving an SN Change Confirm from the master access network device, where an SN counter value may be carried in the SN Change Confirm; and sending the L1/L2 switch command to the terminal.

The processing by the master access network device may include: receiving the SN Change Required; sending the SN Change Confirm to the source secondary access network device; sending an SN addition request to the target secondary access network device, where Ksn between the target secondary access network device and the terminal may be carried in the SN addition request.

Regarding the specific manner in which the source secondary access network device determines the target secondary access network device based on the L1/L3 measurement report, the embodiments do not limit it.

After determining the target access network device, the source secondary access network device may perform the processing of generating indication information and computing the message check code. In the embodiments, the content indicated by the indication information is the same as that in the above embodiments related to dual connectivity, and is not repeated.

In this embodiment, the related descriptions for the integrity protection and/or encryption processing performed on the L1/L2 switch command by the source secondary access network device, and the corresponding integrity verification and/or decryption processing performed on the L1/L2 switch command by the terminal, are all similar to the related processing between the source access network device and the terminal in the above embodiments of the single connectivity scenario, and therefore, the description is not repeated.

The processing after the terminal side receives the L1/L2 switch command may further include: in a case where integrity verification of the L1/L2 switch command is determined to be successful, sending uplink data (UL Data) to the target secondary access network device. Correspondingly, the processing after the target secondary access network device receives the security key Ksn may further include: receiving the uplink data from the terminal. The terminal sending uplink data and the target secondary access network device receiving the uplink data and related processing thereof are the same as those in the above embodiments, and therefore, the description is not repeated.

An exemplary description of the solution provided in the embodiments is provided in conjunction with FIG. 7, and FIG. 7 shows a case of a same MN and switching between different SNs (triggered by the Source SN) in a dual connectivity scenario. It specifically includes the following steps.

Step 701: the UE reports an L1/L3 measurement report to the source SN;

Step 702 to Step 703: the source SN sends an SN Change Required to the MN, and the source SN receives an SN Change Confirm sent from the MN, where the SN Change Confirm may carry an SN counter value. The source SN triggers the MN to generate a new key Ksn for the target SN by sending the SN Change Required to the MN, where the Required includes an identifier of a candidate target node (candidate target node ID), and may include a measurement result of the target SN.

Step 704: the MN provides the K_{SN} between the target SN and the UE to the target SN via an SN addition request; the MN receives an SN addition acknowledgement fed back by the target SN.

Sending K_{SN} by the MN may be that: the MN generates a new key Ksn by using a new SN counter, and sends a UE context to the target SN via the SN addition request to provide the UE context, where the UE context includes the key Ksn used between the target SN and the UE.

The target SN may further compute an integrity protection key and/or an encryption key between the UE and the target SN, etc., based on Ksn.

Step 705: the UE reports an L1 measurement report to the source SN.

Step 706: the source SN sends a cell handover command (i.e., the aforementioned L1/L2 switch command) to the UE, where the cell handover command is an integrity-protected and encrypted command. The content included in the cell handover command is the same as that in the example corresponding to the above FIG. 6, and is repeated.

Step 707 to step 709 are the same as step 605 to step 607 in the above example, and the description is not repeated.

It should be noted that the L1/L3 measurement report in step 701 may be a layer 3 measurement report, that is, step 701 to step 704 occur in the LTM preparation process, and the performing of LTM is still triggered by the L1 measurement report in step 705. Alternatively, the L1/L3 measurement report in step 701 is a layer 1 measurement report, that is, step 701 to step 704 occur in the process of performing LTM, and in this case, step 705 is not performed.

In an embodiment, the secondary access network device remains unchanged, and the master access network device is switched. The source access network device is a source master access network device; the target access network device is a target master access network device. The L1/L2 switch command is used for indicating the terminal to switch from the source master access network device to the target master access network device.

Before the terminal receives the L1/L2 switch command from the source master access network device, it may further include: sending an L1/L3 measurement report to the source master access network device. Correspondingly, before the source master access network device sends the L1/L2 switch command to the terminal, it may further include: receiving the L1/L3 measurement report from the terminal.

Optionally, the L1/L3 measurement report may include an L3 measurement report and an L1 measurement report.

The terminal may report the L3 measurement report during the LTM preparation phase. The processing after the source master access network device receives the L3 measurement report may include: determining the target master access network device for the terminal based on the L1/L3 measurement report; sending a Handover Request to the target master access network device, in which a security base key K_{NG-RAN*} between the target master access network device and the terminal may be carried; receiving a Handover Request Acknowledge from the target master access network device. Processing by the target master access network device may include: receiving the Handover Request; sending the Handover Request Acknowledge to the source master access network device; and sending an SN addition request to the secondary access network device.

The Handover Request may include at least one of: configuration information (MCG and SCG configuration, Master cell group and secondary cell group configuration); an SN ID for indicating an SN currently connected to the UE; an SN UE XnAP ID for indicating that the UE context on the SN is generated by the source MN; a UE context; a security base key K_{NG-RAN*} with the terminal generated for the target master access network device. The target master access network device uses K_{NG-RAN*} as the K_{gNB} with the terminal.

The SN addition request may carry the SN UE XnAP ID for referencing the UE context, i.e., indicating the SN to continue to use the UE context generated by the source MN.

The terminal may report an L1 measurement report in the phase of performing LTM. Processing after the source master access network device receives the L1 measurement report may include: sending the L1/L2 switch command to the terminal.

Optionally, the L1/L3 measurement report may include an L1 measurement report. The terminal may report an L1 measurement report in the phase of performing LTM. Processing after the source master access network device receives the L1 measurement report may include: determining a target master access network device for the terminal based on the L1/L3 measurement report; sending a Handover Request to the target master access network device, in which a security base key K_{NG-RAN*} between the target master access network device and the terminal may be carried; receiving a Handover Request Acknowledge from the target master access network device; sending the L1/L2 switch command to the terminal. The processing by the target master access network device is the same as that in the above example, and is not repeated.

In this embodiment, the integrity protection and/or encryption processing performed on the L1/L2 switch command by the source master access network device, and the corresponding integrity verification and/or decryption processing performed on the L1/L2 switch command by the terminal, are all similar to the related processing between the source access network device and the terminal in the above embodiments, and therefore, the description is not repeated.

The processing after the terminal side receives the L1/L2 switch command may further include: in a case where integrity verification of the L1/L2 switch command is determined to be successful, sending uplink data (UL Data) to the target master access network device. Correspondingly, the processing by the target master access network device may further include: receiving the uplink data from the terminal.The terminal sending uplink data and the target master access network device receiving the uplink data and related processing thereof are similar to those in the above embodiments, and therefore, the description is not repeated.

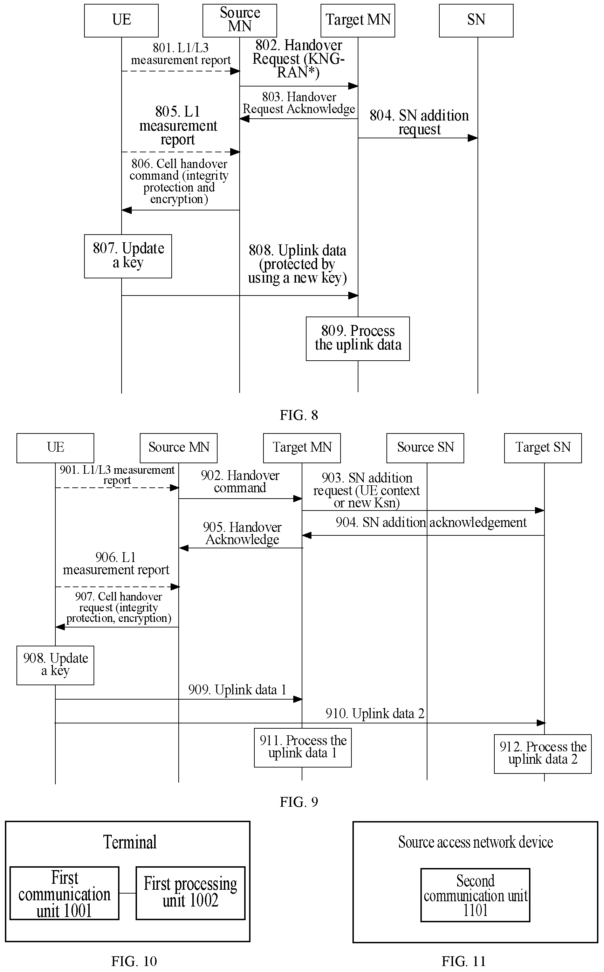

An exemplary description of the solution provided in the embodiments is provided in conjunction with FIG. 8, and FIG. 8 shows a case of switching different MNs (triggered by the Source MN) and the SN unchanged in a dual connectivity scenario. It specifically includes the following steps.

Step 801: the UE reports an L1/L3 measurement report to the source MN;

Step 802 to step 803: the source MN sends a Handover Request to the target MN, and the source MN receives an SN Handover Request Acknowledge sent from the target MN. The content included in the Handover Request Acknowledge is the same as that in the above embodiments, and is not repeated.

Step 804: the target MN provides the SN UE XnAP ID to the SN via an SN addition request for referencing the UE context, i.e., indicating the SN to continue to use the UE context generated by the source MN.

Step 805: the UE reports an L1 measurement report to the source MN.

Step 806: the source MN sends a cell handover command (i.e., the aforementioned L1/L2 switch command) to the UE, where the cell handover command is an integrity-protected and encrypted command. The cell handover command includes or is used for indicating at least one of: an identifier of the target MN, index information of the target MN, a permanent identifier PCI of a target cell, index information of the target cell, a security parameter NCC, and may include security algorithm identifier(s) supported/selected by the target MN, and an identifier of UP integrity/ciphering indication for indicating the UE to activate user plane integrity protection or ciphering protection.

Step 807: the UE updates the key. Specifically, the UE updates the K_{NG-RAN*} with the Target MN; furthermore, it may also update an integrity protection key and/or an encryption key between the UE and the Target MN, and so on, which is not exhaustively listed or limited here.

Step 808: the UE sends uplink data to the Target MN, and the uplink data may be protected by using a new key.

Step 809: the Target MN processes the uplink data.

It should be noted that the L1/L3 measurement report in step 801 may be a layer 3 measurement report, that is, step 801 to step 804 occur in the LTM preparation process, and the performing of LTM is still triggered by the L1 measurement report in step 805. Alternatively, the L1/L3 measurement report in step 801 is a layer 1 measurement report, that is, step 801 to step 804 occur in the process of performing LTM, and in this case, step 805 is not performed.

In an embodiment, the master access network device and the secondary access network device are switched. The source access network device is a source master access network device; the L1/L2 switch command is used for indicating the terminal to switch from the source master access network device to a target master access network device and from a source secondary access network device to a target secondary access network device.

Before the terminal receives the L1/L2 switch command from the source master access network device, it may further include: sending an L1/L3 measurement report to the source master access network device. Correspondingly, before the source master access network device sends the L1/L2 switch command to the terminal, it may further include: receiving the L1/L3 measurement report from the terminal.

Optionally, the L1/L3 measurement report may include an L3 measurement report and an L1 measurement report.

The terminal may report the L3 measurement report during the LTM preparation phase. Processing after the source master access network device receives the L3 measurement report may include: determining a target master access network device for the terminal based on the L1/L3 measurement report; sending a Handover Request to the target master access network device, in which a security base key K_{NG-RAN*} between the target master access network device and the terminal may be carried; receiving a Handover Request Acknowledge from the target master access network device. The processing by the target master access network device may include: receiving the Handover Request; sending an SN addition request to the target secondary access network device; receiving an SN addition acknowledgement sent from the target secondary access network device; and sending a Handover Request Acknowledge to the source master access network device.

The Handover Request may include at least one of: the security base key K_{NG-RAN*} with the terminal generated for the target master access network device, configuration information (for example, MCG and SCG configuration, master cell group and secondary cell group configuration), information related to the source SN, SN UE XnAP ID, an SN ID, and a UE context of the SN.

The SN addition request may carry one of: a UE context (that is, the UE context generated by the source master access network device for the source secondary access network device (that is, Ksn remains unchanged)), and a key Ksn updated by the target master access network device.

The Handover Request Acknowledge may carry at least one of: an algorithm selected by the target secondary access network device, a UP indication, and may include an SN counter (if the Target MN generates a new key Ksn for the Target SN, by using K_{NG-RAN*} and the SN counter).

The terminal may report an L1 measurement report in the phase of performing LTM. Processing after the source master access network device receives the L1 measurement report may include: sending the L1/L2 switch command to the terminal.

Optionally, the L1/L3 measurement report may include an L1 measurement report.

The terminal may report an L1 measurement report in the phase of performing LTM. The processing after the source master access network device receives the L1 measurement report may include: determining a target master access network device for the terminal based on the L1/L3 measurement report; sending a Handover Request to the target master access network device, in which a security base key K_{NG-RAN*} between the target master access network device and the terminal may be carried; receiving a Handover Request Acknowledge from the target master access network device; and sending an L1/L2 switch command to the terminal. The processing by the target master access network device is the same as that in the above example, and is not repeated.

In this embodiment, related descriptions for integrity protection and/or encryption processing performed on the L1/L2 switch command by the source master access network device, and the corresponding integrity verification and/or decryption processing performed on the L1/L2 switch command by the terminal are similar to the related processing between the source access network device and the terminal in the above embodiments, and therefore, the description is not repeated.

The processing after the terminal side receives the L1/L2 switch command may further include: in a case where integrity verification of the L1/L2 switch command is determined to be successful, sending uplink data (UL Data) to the target master access network device and/or sending uplink data to the target secondary access network device. Correspondingly, the processing by the target master access network device may further include: receiving the uplink data from the terminal. The processing by the target secondary access network device may further include: receiving the uplink data from the terminal.

Description related to the terminal sending uplink data, the target master access network device receiving the uplink data and related processing thereof, and the target secondary access network device receiving the uplink data and related processing thereof are similar to that in the above embodiments, and therefore, the description is not repeated.

An exemplary description of the solution provided in the embodiments is provided in conjunction with FIG. 9, and FIG. 9 shows a case of switching different MNs (triggered by the Source MN) and switching different SNs in a dual connectivity scenario. It specifically includes the following steps.

Step 901: the UE reports an L1/L3 measurement report to the source MN.

Step 902: the source MN sends a Handover Request to the Target MN. The source MN provides, to the Target MN, a key K_{NG-RAN*} used between the Target MN and the UE, configuration information, and information related to the source SN, an SN UE XnAP ID, an SN ID, and a UE context of the SN.

Step 903: the Target MN provides an SN UE XnAP ID to the Target SN through an SN addition request for referencing a UE context or a new Ksn. Specifically, the Target MN may send a UE context to the Target SN, i.e., the UE context generated by the source MN for the source SN (i.e., Ksn remains unchanged), or the Target MN updates the key Ksn and provides a new Ksn to the target SN.

Step 904: the Target SN sends an SN addition acknowledgement to the Target MN.

Step 905: the source MN receives a Handover Request Acknowledge sent from the Target MN.

Step 906: the UE reports an L1 measurement report to the source MN.

Step 907: the source MN sends a cell handover command (that is, the aforementioned L1/L2 switch command) to the UE, where the cell handover command is an integrity-protected and encrypted command.

The cell handover command includes or is used for indicating at least one of:
(1) at least one related to the Target MN: an identifier of the Target MN, index information of the Target MN, a permanent identifier PCI of a target cell, index information of the target cell, a security parameter NCC, possibly a security algorithm identifier supported/selected by the Target MN, an identifier of UP integrity/ciphering indication for indicating the UE to activate user plane integrity protection or ciphering protection; and
(2) at least one related to the Target SN: an identifier of the Target SN, index information of the Target SN, a permanent identifier PCI of a target cell, index information of the target cell, a security parameter SN counter, a security algorithm identifier supported/selected by the Target SN, and an identifier for indicating the UE to activate user plane integrity protection or ciphering protection.

Step 908: the UE updates the key. Specifically, the UE updates the K_{NG-RAN*} with the Target MN; furthermore, it may also update an integrity protection key and/or an encryption key between the UE and the Target MN, and so on, which is not exhaustively listed or limited here. And/or, the UE generates a key Ksn with the target SN according to the SN counter and a key KgNB with the MN, and uses Ksn as the key KgNB with the SN; the UE uses a security algorithm selected by the target SN to generate an AS key, and according to the indication of the target SN, correspondingly enables protection of the user plane.

Step 909: the UE sends uplink data 1 to the Target MN, and the uplink data 1 may be protected by using the new key.

Step 910: the UE sends uplink data 2 to the Target SN, and the uplink data 1 may be protected by using the new key or the original key.

Step 911: the Target MN processes the uplink data 1.

Step 912: the Target SN processes the uplink data 2.

It should be pointed out that the L1/L3 measurement report in step 901 may be a layer 3 measurement report, that is, step 901 to step 905 occur in the LTM preparation procedure, and the performing of LTM is still triggered by the L1 measurement report in step 906. Alternatively, the L1/L3 measurement report in step 901 is a layer 1 measurement report, that is, step 901 to step 905 occur in the process of performing LTM, in this case, step 906 is not performed.

By adopting the solutions provided in the embodiments, a message check code can be carried in the L1/L2 switch command used for indicating the terminal to switch to the target access network device, where the message check code is used for verifying the integrity of the L1/L2 switch command. In this way, a security protection mechanism can be introduced in the L1/L2 switch procedure, to prevent the switch command message transmitted by lower-layer signaling from tampering attacks, or eavesdropping attacks, thereby improving the security of the switch command transmitted by the lower-layer signaling.

In the related art, in the upcoming standardized inter-CU LTM (single connectivity, or dual connectivity), due to the fact that the switched target cell may belong to another base station, a requirement for key update arises. In an existing L3-based switch, an HO command message includes a security parameter NCC; a handover message with dual connectivity includes a security parameter SN counter; and these two types of handover messages may include some indications related to the generation of the security context, and these information are directly associated with the UE how to compute a key with the target base station and how to enable security protection with the target base station. However, in the inter-CU LTM, if lower-layer L1/L2 signaling (MAC CE) is used to transmit the security parameter or related indication information, because the lower-layer signaling lacks security protection, it is easy for an eavesdropper to acquire important information of the access network (such as a base station identifier, a candidate cell identifier), causing the security parameter to be tampered with, the security contexts generated by the UE and the gNB to be inconsistent, thereby leading to a switch failure, or causing the algorithm identifier and security policy to be tampered with, resulting in a downgrade attack, there by leading to a downgrade in security protection between the UE and the target base station. Therefore, a new security mechanism needs to be introduced to guarantee the security procedure of inter-CU LTM.

The above various embodiments provided in the embodiments of the present disclosure, for the security and key update mechanism in the single connectivity inter-CU LTM process or the dual connectivity inter-CU LTM process, perform integrity protection, or encryption and integrity protection on the switch command message transmitted by using an MAC CE, to prevent tampering attacks, or eavesdropping attacks. In addition, the above various embodiments provided in the embodiments of the present disclosure also provide a protection mechanism for the important security parameter NCC, SN counter, security algorithm identifier of the target base station, security policy information, and identifier of the target base station or target candidate cell.

FIG. 10 is a composition structural schematic diagram of a terminal according to an embodiment of the present disclosure, including:
a first communication unit 1001, configured to receive a layer 1/layer 2 (L1/L2) switch command from a source access network device, where the L1/L2 switch command carries indication information and a message check code, the indication information is used for the terminal to switch to a target access network device, and the message check code is used for verifying integrity of the L1/L2 switch command.

The first communication unit is configured to send an L1/L2 measurement report to the source access network device.

As shown in FIG. 10, the terminal further includes:
a first processing unit 1002, configured to: compute a verification code based on an integrity protection key shared with the source access network device and first-part plaintext information; and verify the integrity of the L1/L2 switch command based on the verification code and the message check code.

The indication information comprises the first-part plaintext information.

The indication information comprises ciphertext information, and the first processing unit is configured to: compute second-part plaintext information based on an encryption key shared with the source access network device and the ciphertext information, where the second-part plaintext information is different from the first-part plaintext information.

The first processing unit is configured to compute the verification code based on the integrity protection key shared with the source access network device, the first-part plaintext information, and one of: the second-part plaintext information and the ciphertext information.

The first processing unit is configured to: compute a verification code based on an integrity protection key shared with the source access network device and ciphertext information; and verify the integrity of the switch command based on the verification code and the message check code.

The indication information comprises ciphertext information, and the first processing unit is configured to compute first-part plaintext information based on an encryption key shared with the source access network device and the ciphertext information.

The integrity protection key is one of: a first key, where the first key comprises one of: a control plane integrity check key, a security base key, a user plane integrity check key, and a physical layer key; and a key computed based on the first key.

The encryption key is one of: a second key, where the second key comprises one of: a control plane encryption key, a security base key, a user plane encryption key, a physical layer key; and a key computed based on the second key.

The indication information is used for indicating at least one of: identifier information related to the target access network device, a security parameter, security activation information.

FIG. 11 is a composition structural schematic diagram of a source access network device according to an embodiment of the present disclosure, including:
a second communication unit 1101, configured to send a layer 1/layer 2 (L1/L2) switch command to a terminal, where the L1/L2 switch command carries indication information and a message check code, the indication information is used for the terminal to switch to a target access network device, and the message check code is used for verifying integrity of the L1/L2 switch command.

The second communication unit is configured to receive an L1/L2 measurement report from the terminal.

The the message check code is computed based on an integrity protection key shared with the terminal and first-part plaintext information.

The indication information comprises the first-part plaintext information.

The indication information comprises ciphertext information, and the ciphertext information is computed based on an encryption key shared with the terminal and second-part plaintext information, where the second-part plaintext information is different from the first-part plaintext information.

The message check code is computed based on the integrity protection key shared with the terminal, the first-part plaintext information, and one of: the second-part plaintext information and the ciphertext information.

The message check code is computed based on an integrity protection key shared with the terminal and ciphertext information.

The indication information comprises ciphertext information, and the ciphertext information is computed based on an encryption key shared with the terminal and first-part plaintext information.

The integrity protection key is one of: a first key, where the first key comprises one of: a control plane integrity check key, a security base key, a user plane integrity check key, and a physical layer key; and a key computed based on the first key.

The encryption key is one of: a second key, where the second key comprises one of: a control plane encryption key, a security base key, a user plane encryption key, a physical layer key; and a key computed based on the second key.

The indication information is used for indicating at least one of: identifier information related to the target access network device, a security parameter, security activation information.

The devices of the embodiments of the present disclosure can implement the corresponding functions of the respective devices in the above communication method embodiments. The procedures, functions, implementations, and beneficial effects corresponding to the respective modules (sub-modules, units, or components, etc.) in the terminal or the source access network device may refer to the corresponding descriptions in the above method embodiments, which are not repeated herein. It should be noted that the functions described for the respective modules (sub-modules, units, or components, etc.) in the devices of the embodiments of the present disclosure may be implemented by different modules (sub-modules, units, or components, etc.), or may be implemented by a same module (sub-module, unit, or component, etc.).

It should be understood that, in the various embodiments of the present disclosure, the sizes of the sequence numbers of the above processes does not mean the order of execution, and the execution order of each process should be determined by its function and internal logic, and should not constitute any limitation on the implementation process of the embodiments of the present disclosure.

Those skilled in the art may clearly understand that, for the convenience and brevity of description, the specific working processes of the above-described systems, apparatuses, and units may refer to the corresponding processes in the above method embodiments, which are not repeated here.

The above is merely the DETAILED DESCRIPTION of the present disclosure, but the protection scope of the present disclosure is not limited thereto, and any skilled in the art may easily conceive of changes or substitutions within the technical scope disclosed in the present disclosure, which should be covered within the protection scope of the present disclosure. Therefore, the protection scope of the present disclosure shall be based on the protection scope of the claims.

## Claims

1. A communication method performed by a terminal, comprising:
receiving a layer 1/layer 2 (L1/L2) switch command from a source access network device, wherein the L1/L2 switch command carries indication information and a message check code, the indication information is used for the terminal to switch to a target access network device, and the message check code is used for verifying integrity of the L1/L2 switch command.

2. The method according to claim 1, wherein the method further comprises:
sending an L1/L2 measurement report to the source access network device.

3. The method according to claim 1 or 2, wherein the method further comprises:
computing a verification code based on an integrity protection key shared with the source access network device and first-part plaintext information; and
verifying the integrity of the L1/L2 switch command based on the verification code and the message check code.

4. The method according to claim 3, wherein the indication information comprises the first-part plaintext information.

5. The method according to claim 4, wherein the indication information comprises ciphertext information, and the method further comprises:
computing second-part plaintext information based on an encryption key shared with the source access network device and the ciphertext information, wherein the second-part plaintext information is different from the first-part plaintext information.

6. The method according to claim 5, wherein computing the verification code based on the integrity protection key shared with the source access network device and the first-part plaintext information, comprises:
computing the verification code based on the integrity protection key shared with the source access network device, the first-part plaintext information, and one of: the second-part plaintext information and the ciphertext information.

7. The method according to claim 1 or 2, wherein the method further comprises:
computing a verification code based on an integrity protection key shared with the source access network device and ciphertext information; and
verifying the integrity of the switch command based on the verification code and the message check code.

8. The method according to claim 3 or 7, wherein the indication information comprises ciphertext information, and the method further comprises:
computing first-part plaintext information based on an encryption key shared with the source access network device and the ciphertext information.

9. The method according to any one of claims 3 to 8, wherein the integrity protection key is one of:
a first key, wherein the first key comprises one of: a control plane integrity check key, a security base key, a user plane integrity check key, and a physical layer key; and
a key computed based on the first key.

10. The method according to any one of claims 5, 6, and 8, wherein the encryption key is one of:
a second key, wherein the second key comprises one of: a control plane encryption key, a security base key, a user plane encryption key, a physical layer key; and
a key computed based on the second key.

11. The method according to any one of claims 1 to 10, wherein the indication information is used for indicating at least one of: identifier information related to the target access network device, a security parameter, security activation information.

12. A communication method, performed by a source access network device and comprising:
sending a layer 1/layer 2 (L1/L2) switch command to a terminal, wherein the L1/L2 switch command carries indication information and a message check code, the indication information is used for the terminal to switch to a target access network device, and the message check code is used for verifying integrity of the L1/L2 switch command.

13. The method according to claim 12, wherein the method further comprises:
receiving an L1/L2 measurement report from the terminal.

14. The method according to claim 12 or 13, wherein the message check code is computed based on an integrity protection key shared with the terminal and first-part plaintext information.

15. The method according to claim 14, wherein the indication information comprises the first-part plaintext information.

16. The method according to claim 15, wherein the indication information comprises ciphertext information, and the ciphertext information is computed based on an encryption key shared with the terminal and second-part plaintext information, wherein the second-part plaintext information is different from the first-part plaintext information.

17. The method according to claim 16, wherein the message check code is computed based on the integrity protection key shared with the terminal, the first-part plaintext information, and one of: the second-part plaintext information and the ciphertext information.

18. The method according to claim 12 or 13, wherein the message check code is computed based on an integrity protection key shared with the terminal and ciphertext information.

19. The method according to claim 14 or 18, wherein the indication information comprises ciphertext information, and the ciphertext information is computed based on an encryption key shared with the terminal and first-part plaintext information.

20. The method according to any one of claims 14 to 19, wherein the integrity protection key is one of:
a first key, wherein the first key comprises one of: a control plane integrity check key, a security base key, a user plane integrity check key, and a physical layer key; and
a key computed based on the first key.

21. The method according to any one of claims 16, 17, and 19, wherein the encryption key is one of:
a second key, wherein the second key comprises one of: a control plane encryption key, a security base key, a user plane encryption key, a physical layer key; and
a key computed based on the second key.

22. The method according to any one of claims 12 to 21, wherein the indication information is used for indicating at least one of: identifier information related to the target access network device, a security parameter, security activation information.

23. A terminal, comprising:
a first communication unit, configured to receive a layer 1/layer 2 (L1/L2) switch command from a source access network device, wherein the L1/L2 switch command carries indication information and a message check code, the indication information is used for the terminal to switch to a target access network device, and the message check code is used for verifying integrity of the L1/L2 switch command.

24. The terminal according to claim 23, wherein the first communication unit is configured to send an L1/L2 measurement report to the source access network device.

25. The terminal according to claim 23 or 24, wherein the terminal further comprises:
a first processing unit, configured to: compute a verification code based on an integrity protection key shared with the source access network device and first-part plaintext information; and verify the integrity of the L1/L2 switch command based on the verification code and the message check code.

26. The terminal according to claim 25, wherein the indication information comprises the first-part plaintext information.

27. The terminal according to claim 26, wherein the indication information comprises ciphertext information, and the first processing unit is configured to: compute second-part plaintext information based on an encryption key shared with the source access network device and the ciphertext information, wherein the second-part plaintext information is different from the first-part plaintext information.

28. The terminal according to claim 27, wherein the first processing unit is configured to compute the verification code based on the integrity protection key shared with the source access network device, the first-part plaintext information, and one of: the second-part plaintext information and the ciphertext information.

29. The terminal according to claim 23 or 24, wherein the first processing unit is configured to: compute a verification code based on an integrity protection key shared with the source access network device and ciphertext information; and verify the integrity of the switch command based on the verification code and the message check code.

30. The terminal according to claim 25 or 29, wherein the indication information comprises ciphertext information, and the first processing unit is configured to compute first-part plaintext information based on an encryption key shared with the source access network device and the ciphertext information.

31. The terminal according to any one of claims 25 to 30, wherein the integrity protection key is one of: a first key, wherein the first key comprises one of: a control plane integrity check key, a security base key, a user plane integrity check key, and a physical layer key; and a key computed based on the first key.

32. The terminal according to any one of claims 27, 28, and 30, wherein the encryption key is one of: a second key, wherein the second key comprises one of: a control plane encryption key, a security base key, a user plane encryption key, a physical layer key; and a key computed based on the second key.

33. The terminal according to any one of claims 23 to 32, wherein the indication information is used for indicating at least one of: identifier information related to the target access network device, a security parameter, security activation information.

34. A source access network device, comprising:
a second communication unit, configured to send a layer 1/layer 2 (L1/L2) switch command to a terminal, wherein the L1/L2 switch command carries indication information and a message check code, the indication information is used for the terminal to switch to a target access network device, and the message check code is used for verifying integrity of the L1/L2 switch command.

35. The source access network device according to claim 34, wherein the second communication unit is configured to receive an L1/L2 measurement report from the terminal.

36. The source access network device according to claim 34 or 35, wherein the message check code is computed based on an integrity protection key shared with the terminal and first-part plaintext information.

37. The source access network device according to claim 36, wherein the indication information comprises the first-part plaintext information.

38. The source access network device according to claim 37, wherein the indication information comprises ciphertext information, and the ciphertext information is computed based on an encryption key shared with the terminal and second-part plaintext information, wherein the second-part plaintext information is different from the first-part plaintext information.

39. The source access network device according to claim 38, wherein the message check code is computed based on the integrity protection key shared with the terminal, the first-part plaintext information, and one of: the second-part plaintext information and the ciphertext information.

40. The source access network device according to claim 34 or 35, wherein the message check code is computed based on an integrity protection key shared with the terminal and ciphertext information.

41. The source access network device according to claim 36 or 40, wherein the indication information comprises ciphertext information, and the ciphertext information is computed based on an encryption key shared with the terminal and first-part plaintext information.

42. The source access network device according to any one of claims 36 to 41, wherein the integrity protection key is one of: a first key, wherein the first key comprises one of: a control plane integrity check key, a security base key, a user plane integrity check key, and a physical layer key; and a key computed based on the first key.

43. The source access network device according to any one of claims 38, 39, and 41, wherein the encryption key is one of: a second key, wherein the second key comprises one of: a control plane encryption key, a security base key, a user plane encryption key, a physical layer key; and a key computed based on the second key.

44. The source access network device according to any one of claims 34 to 43, wherein the indication information is used for indicating at least one of: identifier information related to the target access network device, a security parameter, security activation information.
